# EUROPEAN PATENT SPECIFICATION

(11) **EP 3 843 310 B1**
(45) Date of publication and mention of the grant of the patent: **18.11.2026**
(21) Application number: 18930569.1
(22) Date of filing: 23.08.2018
(51) Int. Cl.: H04L 1/18, H04L 1/16

(54) **METHOD AND DEVICE FOR TRANSMITTING HARQ CODEBOOK**
VERFAHREN UND VORRICHTUNG ZUR ÜBERTRAGUNG EINES HARQ-CODEBUCHES
PROCÉDÉ ET DISPOSITIF POUR LA TRANSMISSION D'UN LIVRE-CODE HARQ

(43) Date of publication of application: 30.06.2021
(73) Proprietor: Beijing Xiaomi Mobile Software Co., Ltd., Beijing 100085 (CN)
(72) Inventor: ZHOU, Juejia, Beijing 100085 (CN)
(74) Representative: Dehns Germany Partnerschaft mbB
(86) International application number: PCT/CN2018/102025
(87) International publication number: WO 2020/037624

(56) References cited:
- WO-A1-2017/085122
- WO-A1-2018/128474
- WO-A2-2017/164626
- SAMSUNG: "HARQ Management and Feedback", vol. RAN WG1, no. Nagoya, Japan; 20170918 - 20170921, 17 September 2017 (2017-09-17), XP051339464, Retrieved from the Internet <URL:http://www.3gpp.org/ftp/Meetings_3GPP_SYNC/RAN1/Docs/> [retrieved on 20170917]
- NOKIA: "HARQ operation on NR unlicensed", 3GPP TSG RAN WG1 MEETING #94 R1-1808820, 10 August 2018 (2018-08-10), XP051516193
- LG ELECTRONICS: "HARQ procedure for NR unlicensed operation", 3GPP TSG RAN WG1 MEETING #94 R1-1808509, 11 August 2018 (2018-08-11), XP051515887

## Description

### TECHNICAL FIELD

The present disclosure relates to a field of communication technology, and more particularly to a method for transmitting a hybrid automatic repeat request (HARQ) codebook and an apparatus for transmitting an HARQ codebook.

### BACKGROUND

In the related art, the fifth-generation (5G) mobile communication system proposes a code block group (CBG) as a transmission unit. In a scene of transmitting a hybrid automatic repeat request (HARQ), it is required to feed back an acknowledgement (ACK) or a non-acknowledgement (NACK) to the CBG. For the HARQ of multiple sub-carriers, it is required to perform effective encoding and aggregation on retransmission information of multiple component carriers (CC), i.e., an HARQ codebook is generated, so as to report retransmission feedback information uniformly.

For an unlicensed frequency band based system, user equipment (UE) needs for follow a listen before talk (LBT) mechanism, which means that it is detected whether a time-frequency resource of the HARQ codebook is idle in advance, if yes, the HARQ codebook can be reported. However, in a case that the time-frequency resource is not idle, it is still a problem whether to upload the HARQ codebook unreported previously when the next detection is performed and how to upload the HARQ codebook unreported previously.

WO2018128474A1 relates to a pre-5th-Generation (5G) or 5G communication system to be provided for supporting higher data rates Beyond 4th-Generation (4G) communication system such as Long Term Evolution (LTE). A method and an apparatus of transmitting a HARQ-ACK/NACK (Hybrid Automatic Repeat Request-Acknowledgment/Negative Acknowledgment) and a downlink transmission method and apparatus are provided. The method of transmitting the HARQ-ACK/NACK includes: receiving, by a user equipment, a PDSCH (Physical Downlink Shared Channel) and a control signaling from a base station in downlink time unit(s); determining, by a user equipment, an uplink time unit in which the HARQ-ACK/NACK corresponding to the received PDSCH is fed back, a size of a HARQ-ACK/NACK codebook for the uplink time unit, and bit positions where the HARQ-ACK/NACKs corresponding to respective downlink time units corresponding to the same uplink time unit are in the HARQ-ACK/NACK codebook, based on the control signaling; generating the HARQ-ACK/NACK codebook, by a user equipment, based on the size of the HARQ-ACK/NACK codebook and the bit positions where the HARQ-ACK/NACKs corresponding to the respective downlink time units corresponding to the same uplink time unit are in the HARQ-ACK/NACK codebook; and transmitting, by a user equipment, the HARQ-ACK/NACK codebook in the uplink time unit. The present disclosure enables the user equipment to figure out a size and bit mapping of a HARQ-ACK/NACK codebook exactly in the case where HARQ-ACK/NACK feedback time is variable.

Background prior art is known from "Samsung: "HARQ Management and Feedback", 3GPP Draft; R1-1716005, 3rd Generation Partnership Project (3GPP), retrievbale from the internet under URL: http://www 3gpp.org/ftp/meetings 3GPPSYNC/RAN1/Docs/. This document considers HARQ operation, including HARQ process determination considering the processing time, HARQ-ACK timing indication and HARQ-ACK feedback design.

### SUMMARY

Embodiments of the present disclosure provide a method for transmitting a hybrid automatic repeat request (HARQ) codebook and an apparatus for transmitting an HARQ codebook. The technical solution can be described as follows.

The invention is set out in the appended independent claims. Advantageous embodiments of the invention are the subject matter of the dependent claims.

It should be understood that the above general description and the following details are explanatory and illustrative, and shall not be construed to limit the present disclosure.

### BRIEF DESCRIPTION OF THE DRAWINGS

The accompanying drawings are incorporated into the disclosure as one part therein to illustrate embodiments of the present disclosure. The accompanying drawings together with the specification explain the principle of the present disclosure.
FIG. 1 is a flowchart illustrating a method for transmitting an HARQ codebook according to an example embodiment.
FIG. 2A is a schematic diagram illustrating a COT according to an example embodiment.
FIG. 2B is a schematic diagram illustrating a COT according to an example embodiment.
FIG. 3 is a schematic diagram illustrating an HARQ codebook according to an example embodiment.
FIG. 4 is a schematic diagram illustrating an HARQ codebook according to an example embodiment.
FIG. 5A is a schematic diagram illustrating an HARQ codebook according to an example embodiment.
FIG. 5B is a schematic diagram illustrating a COT according to an example embodiment.
FIG. 6 is a schematic diagram illustrating an information block according to an example embodiment.
FIG. 7 is a flowchart illustrating a method for transmitting an HARQ codebook according to an example embodiment.
FIG. 8 is a flowchart illustrating a method for transmitting an HARQ codebook according to an example embodiment.
FIG. 9 is a flowchart illustrating a method for transmitting an HARQ codebook according to an example embodiment.
FIG. 10 is a flowchart illustrating a method for transmitting an HARQ codebook according to an example embodiment.
FIG. 11 is a block diagram illustrating an apparatus for transmitting an HARQ codebook according to an example embodiment.
FIG. 12 is a block diagram illustrating a first integrating module according to an example embodiment.
FIG. 13 is a block diagram illustrating an apparatus for transmitting an HARQ codebook according to an example embodiment.
FIG. 14 is a block diagram illustrating a transmitting module according to an example embodiment.
FIG. 15 is a block diagram illustrating an apparatus for transmitting an HARQ codebook according to an example embodiment.
FIG. 16 is a block diagram illustrating a receiving module according to an example embodiment.
FIG. 17 is a block diagram illustrating an apparatus for transmitting an HARQ codebook according to an example embodiment.
FIG. 18 is a block diagram illustrating an apparatus adapted to transmit an HARQ codebook according to an example embodiment.
FIG. 19 is a block diagram illustrating an apparatus adapted to transmit an HARQ codebook according to an example embodiment.

### DETAILED DESCRIPTION

Reference will be made in detail to embodiments of the present disclosure. Throughout the descriptions with reference to the accompanying drawings, unless specified or limited otherwise, the same or similar elements and the elements are denoted by the same reference numeral in different drawings. The implementations described in the following embodiments shall not be construed to represent all implementations of the present disclosure. Rather, they are merely some examples of the apparatus and method according to some aspects of the present disclosure, as described in the claims.

In the related art, for an unlicensed frequency band based system, a hybrid automatic repeat request (HARQ) technology can be adopted. For a case of receiving downlink information, transmission feedback information, such as an acknowledgement (ACK) or a non-acknowledgement (NACK) can be fed back to a base station. For one downlink information block, one corresponding HARQ codebook can be reported. One bit in the HARQ codebook indicates a receiving condition of one code block group (CBG) in the downlink information block. If a value of the bit is 1, then it indicates an ACK. If the value is 0, then it indicates a NACK. CBG is a smaller data unit in a transmission block (TB). However, the unlicensed frequency band based system needs for follow a listen before talk (LBT) mechanism, which means that it is detected whether there is sufficient idle time-frequency resource for reporting the HARQ codebook before reporting the HARQ codebook, if no, the HARQ codebook may be not reported. In this case, it is still a problem whether to upload the HARQ codebook unreported previously when the next detection is performed and how to upload the HARQ codebook unreported previously.

To solve the problem, embodiments of the present disclosure provide a technical solution of integrating a plurality of HARQ codebooks. A plurality of HARQ codebooks which are should reported but not reported are integrated into an HARQ codebook, i.e., an integrated HARQ codebook. The integrated HARQ codebook comprises transmission feedback information represented by the plurality of HARQ codebooks, such that network resource occupied by the transmission feedback information can be saved and the transmission feedback information can be reported in time.

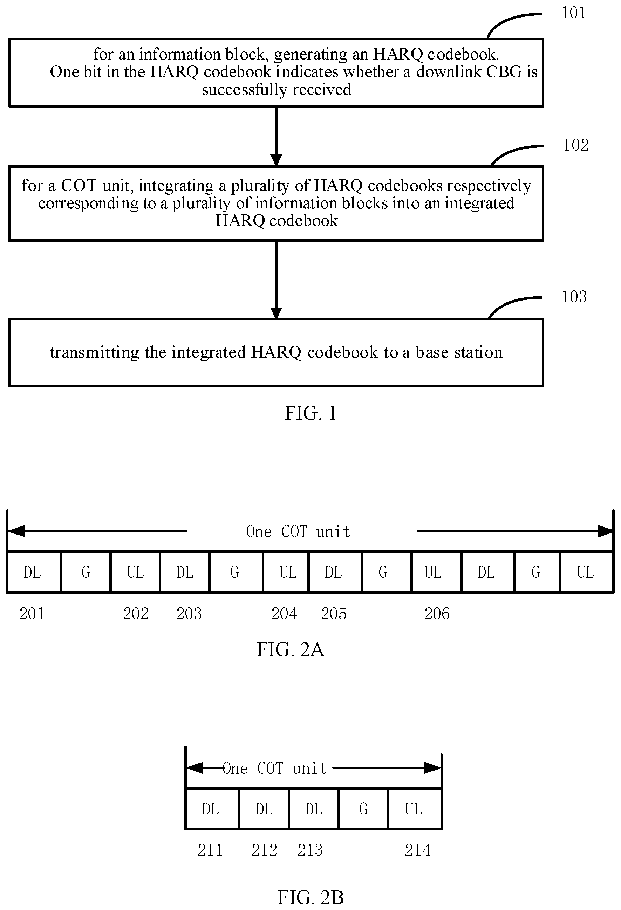

FIG. 1 is a flowchart illustrating a method for transmitting an HARQ codebook according to an example embodiment. The method is applicable to user equipment. The user equipment may be a mobile phone, a computer, a digital broadcast terminal, a messaging device, a game console, a tablet device, a medical device, a fitness device, a personal digital assistant, and so on. As illustrated in FIG. 1, the method includes following blocks 101-103.

At block 101, for an information block, an HARQ codebook is generated. One bit in the HARQ codebook indicates whether a downlink CBG is successfully received.

At block 102, for a COT unit, a plurality of HARQ codebooks respectively corresponding to a plurality of information blocks are integrated into an integrated HARQ codebook. One COT unit corresponds to a plurality of information blocks, one information block corresponds to at least one transmission block, one transmission block corresponds to at least one CBG, and one information block includes a physical downlink control channel transmission and a physical downlink data channel transmission.

At block 103, the integrated HARQ codebook is transmitted to a base station.

In the embodiment, downlink information corresponding to a plurality of HARQ codebooks which need to be reported but not reported is represented by a COT. COT can be a maximum COT.

As illustrated in FIG. 2A, DL represents a downlink, G represents a gap and UL represents an uplink. DL includes a physical downlink control channel and a physical downlink data channel. If user equipment receives downlink information at 201, transmission feedback information, i.e., HARQ codebook needs to be reported at 202 to indicate whether the downlink information is successfully received at 201. However, it is required to detect whether a time-frequency resource of 202 is idle in advance, if yes, an HARQ codebook 1 of 201 is reported, if no, the HARQ codebook 1 is not reported at 202. Then, it is detected whether a time-frequency resource of 204 is idle, if yes, the HARQ codebook 1 and an HARQ codebook 2 of 203 need to be reported.

Of course, the time-frequency resource 202 is not detected and the HARQ codebook 1 is generated after 201 based on a system configuration. Then, it is detected whether the time-frequency resource of 204 is idle, if yes, the HARQ codebook 1 and the HARQ codebook 2 of 203 need to be reported.

Regardless of which case occurs, when the HARQ codebook 1 and the HARQ codebook 2 need to be reported, the HARQ codebook 1 and the HARQ codebook 2 are integrated into an integrated HARQ codebook in the embodiment, i.e., the two HARQ codebooks are integrated into one HARQ codebook. The integrated HARQ codebook reflects receiving conditions at 201 and 203. Further, the integrated HARQ codebook occupies less network resource, which may be easy to detect, thus leading to a higher report rate.

In the embodiment, when it is detected whether the time-frequency resource of 204 is idle, i.e., when an HARQ codebook is reported, the HARQ codebook 1 and the HARQ codebook 2 are integrated. When the time-frequency resource of 206 is idle, the HARQ codebook 1, the HARQ codebook 2 and the HARQ codebook 3 are integrated. Or, if the time-frequency resource of 204 is not idle, the HARQ codebook 1 and the HARQ codebook 2 are integrated to obtain an integrated HARQ codebook 1, and when the time-frequency resource of 206 is idle the integrated HARQ codebook 1 and the HARQ codebook 3 are integrated to obtain an integrated HARQ codebook 2.

As illustrated in FIG. 2B, for downlink information corresponding to three information blocks 211, 212 and 213, an integrated HARQ codebook is fed back in an uplink corresponding to 214. The integrated HARQ codebook is a result of integrating three HARQ codebooks corresponding to the three information blocks 211, 212 and 213.

In an embodiment according to the claimed invention, the HARQ codebook corresponds to a matrix. A maximum CBG number (i.e., the maximum number of CBGs) and a total number of downlink assignment indexes (DAI) of the information block are respectively configured as a row number and a column number of the matrix. The maximum CBG number represents a maximum value of CBG numbers corresponding respectively to a plurality of transmission blocks in the information blocks.

In the embodiment, the HARQ codebook is actually in a string form, but the downlink reflected by the HARQ codebook can correspond to a matrix. A valid coordinate point in the matrix corresponds to one bit in the string, and to one downlink CBG. In the embodiment, the maximum CBG number and the total DAI (i.e., the total number of DAIs) are used to define the row number and the column number of the matrix. One column in the matrix corresponds to one TB. One row in the column corresponds to one CBG in the TB. A plurality of TBs are arranged from high to low in frequency domain, and from big to small in time domain, which conforms an order to counting DAIs. Of course, the TBs can be arranged in other order, which may be specified in a system in advance. One TB may correspond to one slot.

In the embodiment, by adopting the matrix, it is easy to generate an HARQ codebook and to integrate HARQ codebooks, thus facilitating the base station to parse an HARQ codebook.

In an embodiment according to the claimed invention, block 102 includes step A1 and step A2.

In step A1, for a COT unit, a plurality of HARQ codebooks corresponding to a plurality of information blocks are aligned at a matrix dot (0,0).

In step A2, an AND operation is performed per bit, so as to obtain an integrated HARQ codebook. A maximum value of row numbers and a maximum value of column numbers of the plurality of HARQ codebooks are configured as a row number and a column number of the integrated HARQ codebook.

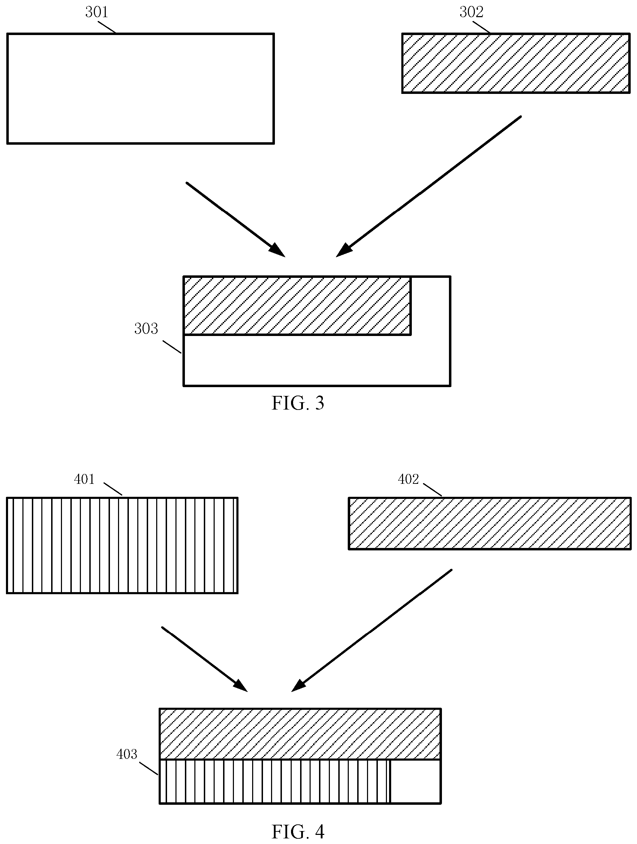

For example, as illustrated in FIG. 3, 301 represents the HARQ codebook 1, which is a 4x13 matrix. 302 represents the HARQ codebook 2, which is a 2x10 matrix. 301 and 302 are aligned at a left corner (0,0). The AND operation is performed on bits at coincident coordinate points and a value of the bit at non-coincident coordinate point is unchanged, so as to obtain an integrated HARQ codebook, i.e., 303. It can be seen from FIG. 3 that the integrated HARQ codebook 303 is a 4x13 matrix. In the embodiment, a size of the integrated HARQ codebook is the same as that of the HARQ codebook 1, which occupies less network resource.

For example, with reference to FIG. 4, 401 represents the HARQ codebook 1, which is a 4x13 matrix. 402 represents the HARQ codebook 2, which is a 2x20 matrix. 401 and 402 are aligned at a left corner (0,0). The AND operation is performed on bits at coincident coordinate points and a value of the bit at non-coincident coordinate point is unchanged, so as to obtain an integrated HARQ codebook, i.e., 403. It can be seen from FIG. 4 that the integrated HARQ codebook 403 is a 4x20 matrix.

In an embodiment, the method may further include step B1.

In step B1, a plurality of integrated HARQ codebooks corresponding to a plurality of COT units are integrated into a final HARQ codebook.

Block 103 may include step B2.

In step B2, the final HARQ codebook is transmitted to the base station.

In the embodiment, one COT unit corresponds to one integrated HARQ codebook. In multiple COT units, regardless of whether an integrated HARQ codebook is uploaded already, a plurality of integrated HARQ codebooks can be integrated into the final HARQ codebook and the final HARQ codebook is uploaded. The integration of the plurality of integrated HARQ codebooks may further save the network resource occupied by the transmission feedback information.

The user equipment may automatically integrate the integrated HARQ codebooks which are not uploaded. Alternatively, the user equipment may integrate the integrated HARQ codebooks which have been uploaded already based on an indication of the base station.

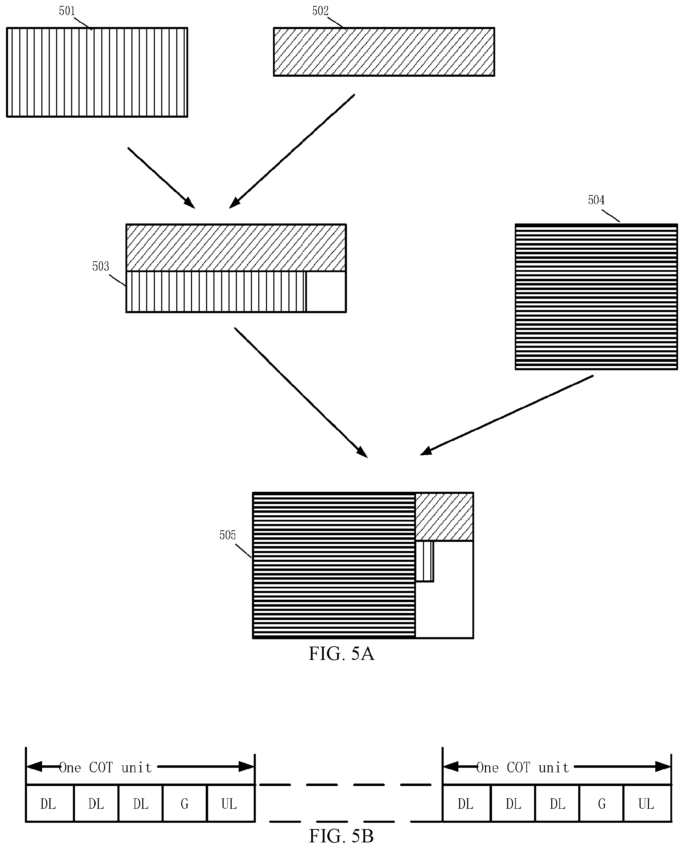

For example, with reference to FIG. 5A, 501 represents the HARQ codebook 1, which is a 4x13 matrix. 502 represents the HARQ codebook 2, which is a 2x20 matrix. 501 and 502 are aligned at a left corner (0,0). The AND operation is performed on bits at coincident coordinate points and a value of the bit at non-coincident coordinate point is unchanged, so as to obtain an integrated HARQ codebook 1, i.e., 503, which is a 4x20 matrix. 503 and 504 (an integrated HARQ codebook 2, which is an 8x10 matrix) can be integrated to obtain a final HARQ codebook, i.e., 505, which is an 8x20 matrix.

As illustrated in FIG. 5B, in multiple COT units, the uplink in each COT unit may be used to report an integrated HARQ codebook. In the uplink in the last COT, the final HARQ codebook can be reported.

In an embodiment, the information block corresponds to a plurality of component carriers (CC).

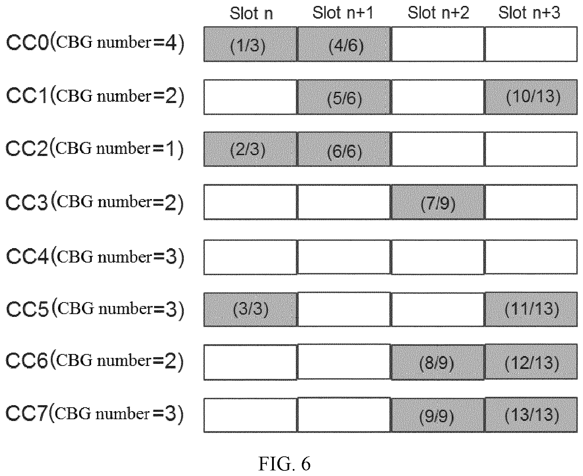

For example, with reference to FIG. 6, take eight CCs as an example, which may be CC0, CC1...CC7 respectively. The TBs on different CCs may include different numbers of CBGs. The shadow line in FIG. 6 represents that there is downlink CBG transmission. One block represents one TB. The number in the block represents a counter (also called as serial number) of DAI/total DAI. The number may be used as an identification of the TB, which may be saved by both the user equipment and the base station. The information block shown in FIG. 6 corresponds to an HARQ codebook which is a 4x13 matrix. The first column in the matrix corresponds to four CBGs indicated by the number 1/3 in FIG. 6. The second column corresponds to one CBG indicated by the number 2/3 in FIG. 6, and so on.

An implementation at the user equipment may be described below in details.

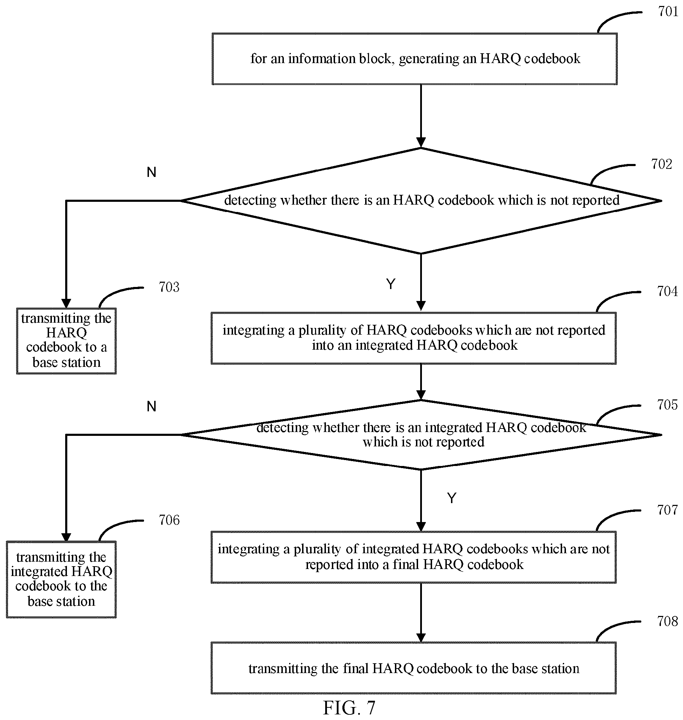

FIG. 7 is a flowchart illustrating a method for transmitting an HARQ codebook according to an example embodiment. The method is applicable to user equipment. The user equipment may be a mobile phone, a computer, a digital broadcast terminal, a messaging device, a game console, a tablet device, a medical device, a fitness device, a personal digital assistant, and so on. As illustrated in FIG. 7, the method includes following blocks 701-708.

At block 701, for an information block, an HARQ codebook is generated. One bit in the HARQ codebook indicates whether a downlink CBG is successfully received.

At block 702, it is detected whether there is an HARQ codebook which is not reported. If no, step at block 703 is executed, if yes, step at block 704 is executed.

At block 703, the HARQ codebook is transmitted to a base station.

Before transmitting the HARQ codebook, it is required to detect whether there is sufficient idle time-frequency resource, if yes, the HARQ codebook is transmitted, if no, the HARQ codebook is saved for detection at block 702.

At block 704, a plurality of HARQ codebooks which are not reported are integrated into an integrated HARQ codebook.

At block 705, it is detected whether there is an integrated HARQ codebook which is not reported. If no, step at block 706 is executed, if yes, step at block 707 is executed.

At block 706, the integrated HARQ codebook is transmitted to the base station.

At block 707, a plurality of integrated HARQ codebooks which are not reported are integrated into a final HARQ codebook.

At block 708, the final HARQ codebook is transmitted to the base station.

The implementation at the user equipment is described above. Correspondingly, the implementation at a base station is also improved. The implementation at the base station is described below.

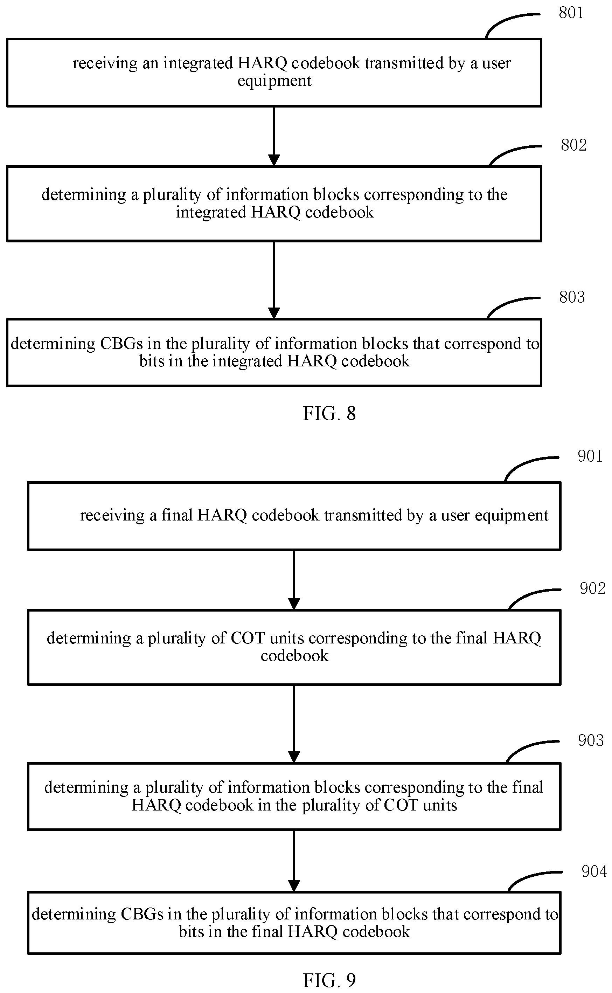

FIG. 8 is a flowchart illustrating a method for transmitting an HARQ codebook according to an example embodiment. The method is applicable to an accessing network device, such as a base station. As illustrated in FIG. 8, the method includes following blocks 801-803.

At block 801, an integrated HARQ codebook transmitted by user equipment is received. The integrated HARQ codebook corresponds to one COT unit, one COT unit corresponds to a plurality of information blocks, one information block corresponds to at least one transmission block, one transmission block corresponds to at least one CBG, and one information block includes a physical downlink control channel transmission and a physical downlink data channel transmission.

At block 802, a plurality of information blocks corresponding to the integrated HARQ codebook are determined.

At block 803, CBGs in the plurality of information blocks that correspond to bits in the integrated HARQ codebook are determined.

In the embodiment, since the integrated HARQ codebook is integrated from a plurality of HARQ codebooks, the base station needs to establish correspondence between the integrated HARQ codebook and information blocks, such that the base station can know the receiving conditions of which CBGs in the information blocks are represented by the bit in the integrated HARQ codebook.

The AND operation is performed when integrating the HARQ codebooks. If a value of a bit in the integrated HARQ codebook is 1, it indicates that corresponding CBGs in the information blocks are successfully received. If a value of a bit in the integrated HARQ codebook is 0, it indicates that corresponding CBGs in the information blocks are unsuccessfully received and need to be re-transmitted.

For example, when the HARQ codebooks are integrated, if the coordinate point (1,1) of the HARQ codebook 1 has a value 1, while the coordinate point (1,1) of the HARQ codebook 1 has a value 0, then after the AND operation, the coordinate point (1,1) of the integrated HARQ codebook 1 has a value 0. After the base station receives the integrated HARQ codebook 1, the base station may determine that the coordinate point (1,1) corresponds to one CBG 1 in the information block 1 and one CBG 2 in the information block 2. Since the coordinate point (1,1) of the integrated HARQ codebook 1 has a value 0, the base station determines that both the CBG 1 and the CBG 2 need to be re-transmitted.

For another example, continuing with the example of FIG. 3, the base station receives 303. When the base station performs the downlink transmission, information such as counter DAI/total DAI and the number of CBGs on each CC can be recorded. Although the base station may not generate an HARQ codebook, the base station may determine the CBG corresponding to the bit in the HARQ codebook. Further, the base station may record the information blocks whose HARQ codebooks are not received in advance, such that the base station may know which information blocks correspond to 303, and may know that the section corresponding to 2x10 of 303 is a coincident region which corresponds to the information block 1 and the information block 2 and remaining section is non-coincident region which corresponds to the information block 1.

In an embodiment, block 801 may include step C1.

In step C1, a final HARQ codebook transmitted by the user equipment is received.

The method may further include step C2.

In step C2, a plurality of COT units corresponding to the final HARQ codebook are determined.

In the embodiment, the base station may know whether the integrated HARQ codebooks are received for the COT units. If the integrated HARQ codebooks are not received for multiple COT units, then the final HARQ codebook is received at step C1. The multiple COT units corresponding to the final HARQ codebook need to be determined and then the information blocks in each COT unit and the CBGs corresponding to the final HARQ codebook need to be determined. Alternatively, the base station may instruct the user equipment to report the final HARQ codebook, and the base station may know that the final HARQ codebook is received at step C1.

In an embodiment, the information block corresponds to a plurality of component carriers.

The implementation at a base station will be described in details according to following embodiments.

FIG. 9 is a flowchart illustrating a method for transmitting an HARQ codebook according to an example embodiment. The method is applicable to an accessing network device such as a base station. As illustrated in FIG. 9, the method may include blocks 901-904.

At block 901, a final HARQ codebook transmitted by user equipment is received.

At block 902, a plurality of COT units corresponding to the final HARQ codebook are determined.

At block 903, a plurality of information blocks corresponding to the final HARQ codebook are determined in the plurality of COT units.

At block 904, CBGs in the plurality of information blocks that correspond to bits in the final HARQ codebook are determined.

The implementation at user equipment and a base station will be described in details below.

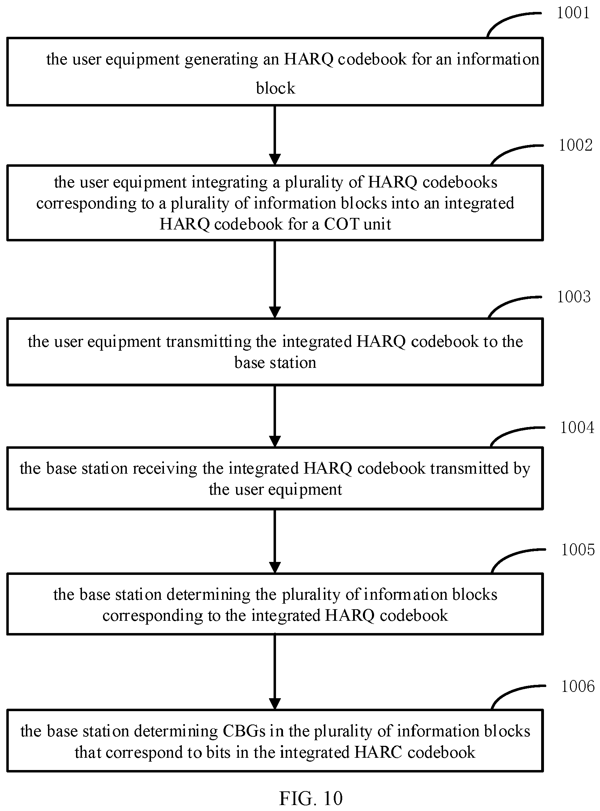

FIG. 10 is a flowchart illustrating a method for transmitting an HARQ codebook according to an embodiment. As illustrated in FIG. 10, the method may include blocks 1001-1003.

At block 1001, the user equipment generates an HARQ codebook for an information block. One bit in the HARQ codebook indicates whether a downlink CBG is successfully received.

At block 1002, the user equipment integrates a plurality of HARQ codebooks corresponding to a plurality of information blocks into an integrated HARQ codebook for a COT unit. One COT unit corresponds to a plurality of information blocks. One information block corresponds to at least one transmission block. One transmission block corresponds to at least one CBG. One information block includes a physical downlink control channel transmission and a physical downlink data channel transmission.

At block 1003, the user equipment transmits the integrated HARQ codebook to the base station.

At block 1004, the base station receives the integrated HARQ codebook transmitted by the user equipment.

At block 1005, the base station determines the plurality of information blocks corresponding to the integrated HARQ codebook.

At block 1006, the base station determines CBGs in the plurality of information blocks that correspond to bits in the integrated HARC codebook.

The above embodiments may be combined in any way as required.

Apparatus embodiments of the present disclosure will be described below, which may be used to implement the method embodiments of the present disclosure.

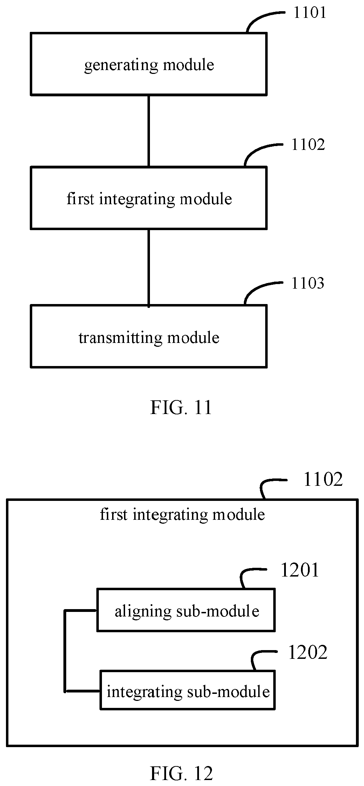

FIG. 11 is a block diagram illustrating an apparatus for transmitting an HARQ codebook according to an example embodiment. The apparatus may be implemented as a part or all of an electronic device through software, hardware or a combination thereof. The apparatus is applicable at user equipment. As illustrated in FIG. 11, the apparatus may include a generating module 1101, a first integrating module 1102 and a transmitting module 1103.

The generating module 1101 is configured to generate an HARQ codebook for an information block. One bit in the HARQ codebook indicates whether a downlink CBG is successfully received.

The first integrating module 1102 is configured to integrate a plurality of HARQ codebooks corresponding to a plurality of information blocks into an integrated HARQ codebook for a COT unit. One COT unit corresponds to a plurality of information blocks. One information block corresponds to at least one transmission block. One transmission block corresponds to at least one CBG. One information block includes a physical downlink control channel transmission and a physical downlink data channel transmission.

The transmitting module 1103 is configured to transmit the integrated HARQ codebook to a base station.

In an embodiment, the HARQ codebook corresponds to a matrix, a maximum CBG number and a total number of downlink assignment indexes (DAI) of the information block are respectively configured as a row number and a column number of the matrix. The maximum CBG number represents a maximum value of CBG numbers corresponding respectively to a plurality of transmission blocks in the information blocks.

In an embodiment, as illustrated in FIG. 12, the first integrating module 1102 includes an aligning sub-module 1201 and an integrating sub-module 1202.

The aligning sub-module 1201 is configured to align the plurality of HARQ codebooks at a matrix dot (0,0) for the COT unit.

The integrating sub-module 1202 is configured to perform an AND operation per bit to obtain the integrated HARQ codebook. A maximum value of the row numbers and a maximum value of column numbers of the plurality of HARQ codebooks are configured as a row number and a column number of the integrated HARQ codebook.

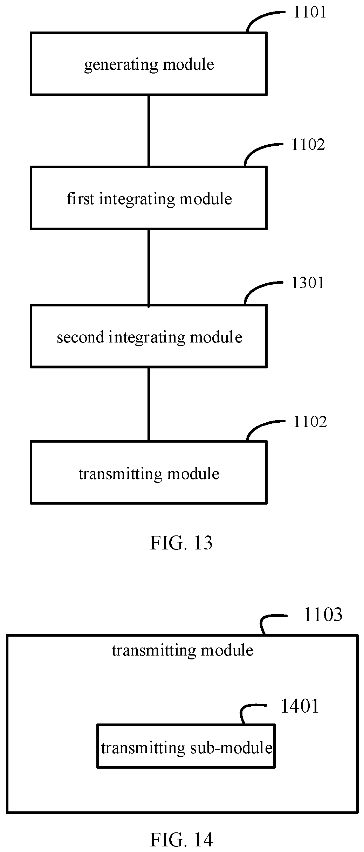

In an embodiment, as illustrated in FIG. 13, the apparatus further includes a second integrating module 1301.

The second integrating module 1301 is configured to integrate a plurality of integrated HARQ codebooks corresponding respectively to a plurality of COT units into a final HARQ codebook.

As illustrated in FIG. 14, the transmitting module 1103 includes a transmitting sub-module 1401.

The transmitting sub-module 1401 is configured to transmit the final HARQ codebook to the base station.

In an embodiment, the information block corresponds to a plurality of component carriers.

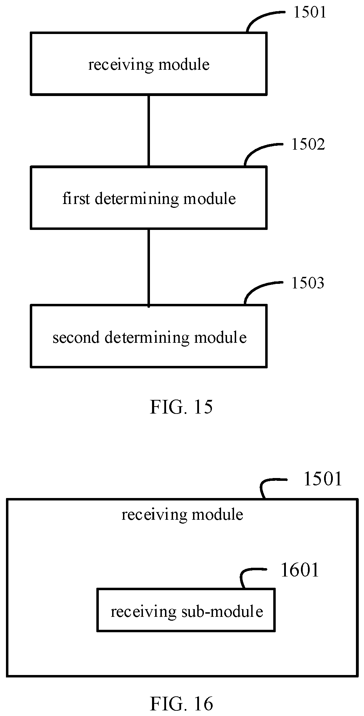

FIG. 15 is a block diagram illustrating an apparatus for transmitting an HARQ codebook according to an example embodiment. The apparatus may be implemented as a part or all of an electronic device through software, hardware or a combination thereof. The apparatus is applicable at a base station. As illustrated in FIG. 15, the apparatus may include a receiving module 1501, a first determining module 1502 and a second determining module 1503.

The receiving module 1501 is configured to receive an integrated HARQ codebook sent by user equipment. The integrated HARQ codebook corresponds to one COT unit, one COT unit corresponds to a plurality of information blocks, one information block corresponds to at least one transmission block, one transmission block corresponds to at least one CBG, and one information block includes a physical downlink control channel transmission and a physical downlink data channel transmission.

The first determining module 1502 is configured to determine a plurality of information blocks corresponding to the integrated HARQ codebook.

The second determining module 1503 is configured to determine CBGs in the plurality of information blocks that correspond to bits in the integrated HARQ codebook.

In an embodiment, as illustrated in FIG. 16, the receiving module 1501 includes a receiving sub-module 1601.

The receiving sub-module 1601 is configured to receive a final HARQ codebook sent by the user equipment.

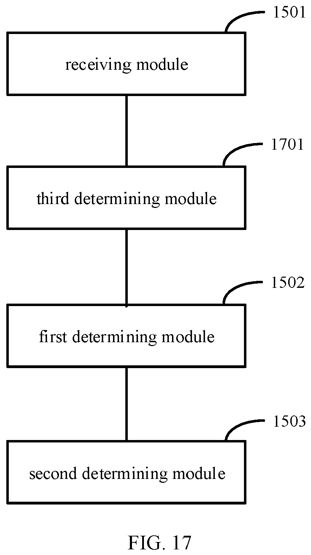

As illustrated in FIG. 17, the apparatus further includes a third determining module 1701.

The third determining module 1701 is configured to determine a plurality of COT units corresponding to the final HARQ codebook.

In an embodiment, the information block corresponds to a plurality of component carriers.

With regard to the above described apparatus embodiments, the specific details that the modules perform the operations have been descried in the method embodiments, which are not described in detail herein.

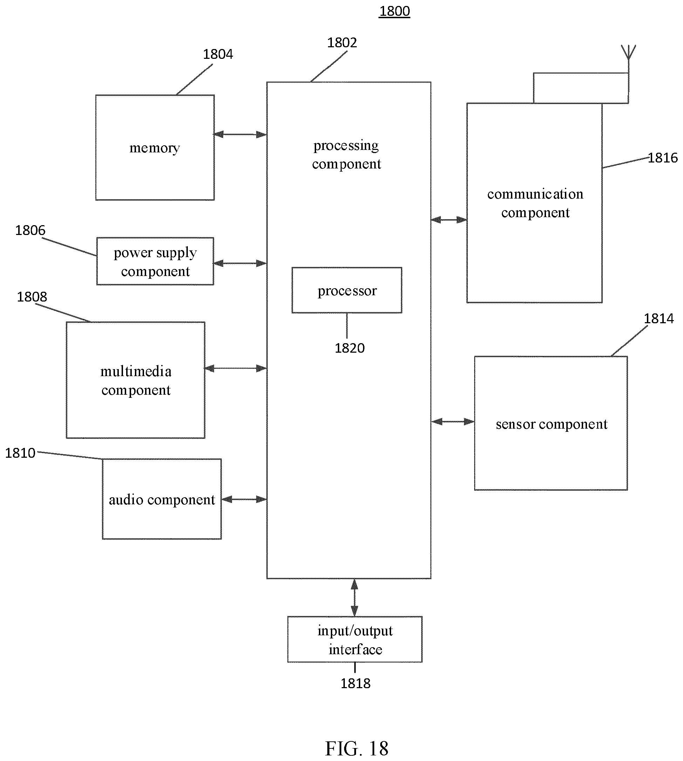

FIG. 18 is a block diagram illustrating an apparatus for transmitting an HARQ codebook according to an example embodiment. For example, the apparatus 1800 may be a mobile phone, a computer, a digital broadcasting terminal, a messaging device, a game console, a tablet device, a medical device, a fitness device, a personal digital assistant, and so on.

The apparatus 1800 may include one or more of the following components: a processing component 1802, memory 1804, a power component 1806, a multimedia component 1808, an audio component 1810, an input/output (I/O) interface 1818, a sensor component 1814, and a communication component 1816.

The processing component 1802 generally controls the overall operations of the apparatus 1800, such as operations associated with display, telephone calls, data communications, camera operations, and recording operations. The processing component 1802 may include one or more processors 1820 to execute instructions to complete all or part of the steps of the aforementioned 8method. In addition, the processing component 1802 may include one or more modules to facilitate the interaction between the processing component 1802 and other components. For example, the processing component 1802 may include a multimedia module to facilitate the interaction between the multimedia component 1808 and the processing component 1802.

The memory 1804 is configured to store various types of data to support operations in the apparatus 1800. Examples of these data include instructions for any application or method operating on the apparatus 1800, contact data, phone book data, messages, pictures, videos, etc. The memory 1804 may be implemented by any type of volatile or non-volatile storage device or their combination, such as a static random access memory (SRAM), an electrically erasable programmable read-only memory (EEPROM), an erasable programmable read only memory (EPROM), a programmable read only memory (PROM), a read only memory (ROM), a magnetic memory, a flash memory, a magnetic or optical disk.

The power component 1806 provides power to various components of the apparatus 1800. The power component 1806 may include a power management system, one or more power supplies, and other components associated with generating, managing, and distributing power to the apparatus 1800.

The multimedia component 1808 includes a screen that provides an output interface between the apparatus 1800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense the boundary of the touch or slide action, but also detect the duration and pressure related to the touch or slide operation. In some embodiments, the multimedia component 1808 includes a front camera and/or a rear camera. When the apparatus 1800 is in an operation mode, such as a shooting mode or a video mode, the front camera and/or the rear camera can receive external multimedia data. Each front camera and rear camera may be a fixed optical lens system or have focal length and optical zooming capabilities.

The audio component 1810 is configured to output and/or input audio signals. For example, the audio component 1810 includes a microphone (MIC), and when the apparatus 1800 is in an operation mode, such as a call mode, a recording mode, and a voice recognition mode, the microphone is configured to receive external audio signals. The received audio signal may be further stored in the memory 1804 or transmitted via the communication component 1816. In some embodiments, the audio component 1810 further includes a speaker for outputting audio signals.

The I/O interface 1818 provides an interface between the processing component 1802 and a peripheral interface module. The peripheral interface module may be a keyboard, a click wheel, a button, and the like. These buttons may include but are not limited to: a home button, a volume button, a start button, and a lock button.

The sensor component 1814 includes one or more sensors for providing the apparatus 1800 with various aspects of state evaluation. For example, the sensor component 1814 may detect the opening/closing state of the apparatus 1000 and the relative positioning of the components. For example, the component is the display and the keypad of the apparatus 1800. The sensor component 1814 may also detect the position changes of the apparatus 1000 or a component of the apparatus 1800, a presence or absence of contacts between the user and the apparatus 1800, an orientation or an acceleration/deceleration of the apparatus 1800, and temperature changes of the apparatus 1800. The sensor assembly 1814 may include a proximity sensor configured to detect the presence of nearby objects when there is no physical contact. The sensor component 1814 may also include a light sensor, such as a CMOS or CCD image sensor, for use in imaging applications. In some embodiments, the sensor component 1814 may also include an acceleration sensor, a gyroscope sensor, a magnetic sensor, a pressure sensor or a temperature sensor.

The communication component 1816 is configured to facilitate wired or wireless communication between the apparatus 1800 and other devices. The apparatus 1800 may access a wireless network based on a communication standard, such as Wi-Fi, 2G, or 3G, or a combination thereof. In an example embodiment, the communication component 1816 receives a broadcast signal or broadcast related information from an external broadcast management system via a broadcast channel. In an example embodiment, the communication component 1816 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the apparatus 1800 may be implemented by one or more application specific integrated circuits (ASIC), digital signal processors (DSP), digital signal processing devices (DSPD), programmable logic devices (PLD), a field programmable gate array (FPGA), controllers, microcontrollers, microprocessors, or other electronic components, used to implement the above-mentioned data transmission method.

In an example embodiment, there is also provided a non-transitory computer-readable storage medium including instructions, such as the memory 1804 including instructions, which may be executed by the processor 1820 of the apparatus 1800 to complete the above data transmission method. For example, the non-transitory computer-readable storage medium may be a ROM, a random access memory (RAM), a CD-ROM, a magnetic tape, a floppy disk, an optical data storage device, and so on.

In an example embodiment, an apparatus for transmitting an HARQ codebook is provided, including a processor and memory configured to store instructions executable by the processor. The processor is configured to generate an HARQ codebook for an information block, in which one bit in the HARQ codebook indicates whether a downlink code block group (CBG) is successfully received; integrate a plurality of HARQ codebooks respectively corresponding to a plurality of information blocks into an integrated HARQ codebook for a channel occupancy time (COT) unit, in which one COT unit corresponds to a plurality of information blocks, one information block corresponds to at least one transmission block, one transmission block corresponds to at least one CBG, and one information block includes a physical downlink control channel transmission and a physical downlink data channel transmission; and transmit the integrated HARQ codebook to a base station.

The processor may be further configured to determine the HARQ codebook corresponds to a matrix. A maximum CBG number and a total number of downlink assignment indexes (DAI) of the information block are respectively configured as a row number and a column number of the matrix. The maximum CBG number represents a maximum value of CBG numbers corresponding respectively to a plurality of transmission blocks in the information blocks.

The processor may be further configured to, for the COT unit, align the plurality of HARQ codebooks at a matrix dot (0,0) and perform an AND operation per bit to obtain the integrated HARQ codebook. A maximum value of row numbers and a maximum value of column numbers of the plurality of HARQ codebooks are configured as a row number and a column number of the integrated HARQ codebook.

The processor may be further configured to integrate a plurality of integrated HARQ codebooks corresponding respectively to a plurality of COT units into a final HARQ codebook. Transmitting the integrated HARQ codebook to the base station includes transmitting the final HARQ codebook to the base station.

The processor may be further configured to determine the information block corresponds to a plurality of component carriers.

A computer-readable storage medium is provided. The computer-readable storage medium has computer instructions stored thereon. When the instructions are executed by a processor of a device, the device may be caused to perform the above method. The method includes generating an HARQ codebook for an information block, in which one bit in the HARQ codebook indicates whether a downlink code block group (CBG) is successfully received; for a channel occupancy time (COT) unit, integrating a plurality of HARQ codebooks respectively corresponding to a plurality of information blocks into an integrated HARQ codebook, in which one COT unit corresponds to a plurality of information blocks, one information block corresponds to at least one transmission block, one transmission block corresponds to at least one CBG, and one information block includes a physical downlink control channel transmission and a physical downlink data channel transmission; and transmitting the integrated HARQ codebook to a base station.

The HARQ codebook corresponds to a matrix, a maximum CBG number and a total number of downlink assignment indexes (DAI) of the information block are respectively configured as a row number and a column number of the matrix. The maximum CBG number represents a maximum value of CBG numbers corresponding respectively to a plurality of transmission blocks in the information blocks.

The instructions stored in the computer-readable storage medium may further include, for a COT unit, integrating a plurality of HARQ codebooks respectively corresponding to a plurality of information blocks into an integrated HARQ codebook includes: for the COT unit, aligning the plurality of HARQ codebooks at a matrix dot (0,0); performing an AND operation per bit to obtain the integrated HARQ codebook. A maximum value of row numbers and a maximum value of column numbers of the plurality of HARQ codebooks are configured as a row number and a column number of the integrated HARQ codebook.

The method further includes integrating a plurality of integrated HARQ codebooks corresponding respectively to a plurality of COT units into a final HARQ codebook. Transmitting the integrated HARQ codebook to the base station includes transmitting the final HARQ codebook to the base station.

The information block corresponds to a plurality of component carriers.

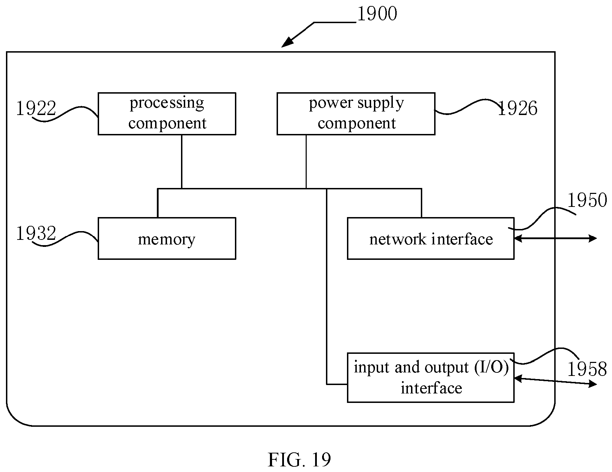

Figure 19 is a block diagram illustrating an apparatus 1900 for transmitting an HARQ codebook according to an example embodiment. For example, the apparatus 1900 may be provided as a computer. Referring to FIG. 19, the apparatus 1900 may include a processing component 1922, which further includes one or more processors, and memory resource represented by memory 1932 for storing instructions executable by the processing component 1922, such as application programs. The application program stored in the memory 1932 may include one or more modules each corresponding to a set of instructions. In addition, the processing component 1922 is configured to execute instructions to perform the above method for transmitting an HARQ codebook.

The apparatus 1900 may further include a power supply component 1926 configured to perform power management of the apparatus 1900, a wired or wireless network interface 1950 configured to connect the apparatus 1900 to the network, and an input and output (I/O) interface 1958. The apparatus 1900 could operate based on an operating system stored in the memory 1203, such as Windows Server^{™}, Mac OS X^{™}, Unix^{™}, Linux^{™}, FreeBSD^{™} or the like.

In an example embodiment, an apparatus for transmitting an HARQ codebook is provided, including a processor and memory configured to store instructions executable by the processor. The processor is configured to receive an integrated HARQ codebook sent by user equipment, in which the integrated HARQ codebook corresponds to one COT unit, one COT unit corresponds to a plurality of information blocks, one information block corresponds to at least one transmission block, one transmission block corresponds to at least one CBG, and one information block includes a physical downlink control channel transmission and a physical downlink data channel transmission; determine a plurality of information blocks corresponding to the integrated HARQ codebook; and determine CBGs in the plurality of information blocks that correspond to bits in the integrated HARQ codebook.

The processor may be further configured to receive an integrated HARQ codebook sent by user equipment by receiving a final HARQ codebook sent by the user equipment. The processor may be further configured to determine a plurality of COT units corresponding to the final HARQ codebook.

The processor may be further configured to determine the information block corresponds to a plurality of component carriers.

A computer-readable storage medium is provided. The computer-readable storage medium has computer instructions stored thereon. When the instructions are executed by a processor of a device, the device may be caused to perform the above method. The method includes receiving an integrated HARQ codebook sent by user equipment, in which the integrated HARQ codebook corresponds to one COT unit, one COT unit corresponds to a plurality of information blocks, one information block corresponds to at least one transmission block, one transmission block corresponds to at least one CBG, and one information block includes a physical downlink control channel transmission and a physical downlink data channel transmission; determining a plurality of information blocks corresponding to the integrated HARQ codebook; and determining CBGs in the plurality of information blocks that correspond to bits in the integrated HARQ codebook.

The instructions stored in the computer-readable storage medium may further include, receiving the integrated HARQ codebook sent by the user equipment includes receiving a final HARQ codebook sent by the user equipment. The method further includes determining a plurality of COT units corresponding to the final HARQ codebook.

The information block corresponds to a plurality of component carriers.

Those skilled in the art will easily think of other embodiments of the present disclosure after considering the specification and practicing the present disclosure. This application is intended to cover any variations, uses, or adaptive changes of the present disclosure. These variations, uses, or adaptive changes follow the general principles of the present disclosure and include common knowledge or conventional technical means in the technical field not disclosed in the present disclosure.

It should be understood that the present disclosure is not limited to the precise structure that has been described above and shown in the drawings, and various modifications and changes may be made without departing from its scope. The scope of the present disclosure is only limited by the appended claims.

## Claims

1. A method for transmitting a hybrid automatic repeat request (HARQ) codebook, applicable to user equipment, the method comprising:
receiving a plurality of information blocks within one channel occupancy time, COT, unit, wherein each information block comprises at least one transmission block, each transmission block comprises at least one code block group, CBG, and each information block comprises a physical downlink control channel transmission and a physical downlink data channel transmission;
for each information block, generating (101, 701) an HARQ codebook, wherein one bit of the HARQ codebook indicates whether a downlink CBG comprised in the information block is successfully received;
for the COT unit, integrating (102) a plurality of HARQ codebooks respectively corresponding to the plurality of information blocks into an integrated HARQ codebook; and
transmitting (103, 706) the integrated HARQ codebook to a base station;
wherein each HARQ codebook for each information block corresponds to a matrix, a valid coordinate point in the matrix corresponds to one bit in the HARQ codebook, for each HARQ codebook a maximum CBG number and a total number of downlink assignment indexes, DAI, of the respective information block are configured as a row number and a column number of the matrix, wherein the maximum CBG number represents a maximum value of CBG numbers corresponding to the at least one transmission block in the respective information block;
wherein said for a COT unit, integrating (102) a plurality of HARQ codebooks respectively corresponding to a plurality of information blocks into an integrated HARQ codebook comprises:
for the COT unit, aligning the plurality of HARQ codebooks at a matrix dot (0,0); and
performing an AND operation per bit to obtain the integrated HARQ codebook, wherein the maximum value of row numbers and the maximum value of column numbers of the plurality of HARQ codebooks are configured as a row number and a column number of the integrated HARQ codebook.

2. The method of claim 1, further comprising:
integrating (707) a plurality of integrated HARQ codebooks corresponding to a plurality of COT units into a final HARQ codebook;
wherein transmitting (103, 706) the integrated HARQ codebook to the base station comprises transmitting (708) the final HARQ codebook to the base station.

3. The method of any of claims 1-2, wherein the information block corresponds to a plurality of component carriers.

4. A method for receiving an HARQ codebook, applicable to a base station, the method comprising:
transmitting a plurality of information blocks within one unit to user equipment, wherein each information block comprises at least one transmission block, each transmission block comprises at least one CBG, and each information block comprises a physical downlink control channel transmission and a physical downlink data channel transmission;
receiving (801) an integrated HARQ codebook sent by the user equipment and generated by a method according to claim 1, wherein the integrated HARQ codebook corresponds to the COT unit;
determining (802) the plurality of information blocks corresponding to the integrated HARQ codebook; and
determining (803) CBGs in the plurality of information blocks that correspond to bits in the integrated HARQ codebook;
wherein each HARQ codebook for each information block corresponds to a matrix, a valid coordinate point in the matrix corresponds to one bit in the HARQ codebook, for each HARQ codebook a maximum CBG number and a total number of downlink assignment indexes (DAI) of the respective information block are configured as a row number and a column number of the matrix, wherein the maximum CBG number represents a maximum value of CBG numbers corresponding to the at least one transmission block in the respective information block,
wherein the method further comprises:
determining the coordinate point corresponding each CBG in each information block, and determining to retransmit CBGs corresponding to the coordinate point having a value 0.

5. The method of claim 4, wherein
said receiving (801) the integrated HARQ codebook sent by the user equipment comprises receiving (901) a final HARQ codebook sent by the user equipment;
the method further comprises determining (902) a plurality of COT units corresponding to the final HARQ codebook.

6. The method of claim 4, wherein the information block corresponds to a plurality of component carriers.

7. An apparatus for transmitting an HARQ codebook, applicable to a user equipment, the apparatus comprising:
a receiving module, configured to receive a plurality of information blocks within one channel occupancy time, COT, unit, wherein each information block comprises at least one transmission block, each transmission block comprises at least one code block group, CBG, and each information block comprises a physical downlink control channel transmission and a physical downlink data channel transmission;
a generating module (1101), configured to generate an HARQ codebook for each information block, wherein one bit in the HARQ codebook indicates whether a downlink CBG comprised in the information block is successfully received;
a first integrating module (1102), configured to integrate a plurality of HARQ codebooks respectively corresponding to the plurality of information blocks into an integrated HARQ codebook for the COT unit; and
a transmitting module (1103), configured to transmit the integrated HARQ codebook to a base station;
wherein each HARQ codebook for each information block corresponds to a matrix, a valid coordinate point in the matrix corresponds to one bit in the HARQ codebook, for each HARQ codebook a maximum CBG number and a total number of downlink assignment indexes, DAI, of the respective information block are configured as a row number and a column number of the matrix, wherein the maximum CBG number represents a maximum value of CBG numbers corresponding to the at least one transmission block in the respective information block;
wherein said first integrating module (1102) is configured to:
for the COT unit, align the plurality of HARQ codebooks at a matrix dot (0,0); and
perform an AND operation per bit to obtain the integrated HARQ codebook, wherein the maximum value of row numbers and the maximum value of column numbers of the plurality of HARQ codebooks are configured as a row number and a column number of the integrated HARQ codebook.

8. The apparatus of claim 7, further comprising:
a second integrating module (1301), configured to integrate a plurality of integrated HARQ codebooks corresponding to a plurality of COT units into a final HARQ codebook;
wherein the transmitting module (1103) comprises:
a transmitting sub-module (1401), configured to transmit the final HARQ codebook to the base station.

9. An apparatus for receiving an HARQ codebook, applicable to a base station, the apparatus comprising:
a transmitting module, configured to transmit a plurality of information blocks within one unit to a user equipment, wherein each information block comprises at least one transmission block, each transmission block comprises at least one code block group, CBG, and each information block comprises a physical downlink control channel transmission and a physical downlink data channel transmission;
a receiving module (1501), configured to receive an integrated HARQ codebook sent by the user equipment and generated by an apparatus according to claim 7, wherein the integrated HARQ codebook corresponds to the COT unit, one information block comprises at least one transmission block, one transmission block comprises at least one CBG, and one information block includes a physical downlink control channel transmission and a physical downlink data channel transmission;
a first determining module (1502), configured to determine the plurality of information blocks corresponding to the integrated HARQ codebook; and
a second determining module (1503), configured to CBGs in the plurality of information blocks that correspond to bits in the integrated HARQ codebook;
wherein each HARQ codebook for each information block corresponds to a matrix, a valid coordinate point in the matrix corresponds to one bit in the HARQ codebook, for each HARQ codebook a maximum CBG number and a total number of downlink assignment indexes, DAI, of the respective information block are configured as a row number and a column number of the matrix, wherein the maximum CBG number represents a maximum value of CBG numbers corresponding to the at least one transmission block in the respective information block;
wherein the apparatus further comprising a third determining module configured to:
determine the coordinate point corresponding each CBG in each information block, and determine to retransmit CBGs corresponding to the coordinate point having a value 0.

10. The apparatus of claim 9, wherein,
the receiving module (1501) comprises a receiving sub-module (1601) configured to receive a final HARQ codebook sent by the user equipment;
the apparatus further comprises a third determining module (1701) configured to determine a plurality of COT units corresponding to the final HARQ codebook.

11. A computer-readable storage medium having computer instructions stored thereon, wherein when the computer instructions are executed by a processor, a method according to any of claims 1-3 is implemented.

12. A computer-readable storage medium having computer instructions stored thereon, wherein when the computer instructions are executed by a processor, a method according to any of claims 4-6 is implemented.

## Patentansprüche

1. Verfahren zum Übertragen eines Hybrid Automatic Repeat Request (HARQ)-Codebuchs, anwendbar auf eine Benutzervorrichtung, wobei das Verfahren umfasst:
Empfangen einer Vielzahl von Informationsblöcken innerhalb einer Kanalbelegungszeit (COT)-Einheit, wobei jeder Informationsblock mindestens einen Übertragungsblock umfasst, jeder Übertragungsblock mindestens eine Codeblockgruppe (CBG) umfasst und jeder Informationsblock eine Übertragung über einen physikalischen Downlink-Steuerkanal und eine Übertragung über einen physikalischen Downlink-Datenkanal umfasst;
für jeden Informationsblock, Erzeugen (101, 701) eines HARQ-Codebuchs, wobei ein Bit des HARQ-Codebuchs angibt, ob eine Downlink-CBG, die in dem Informationsblock enthalten ist, erfolgreich empfangen wurde;
für die COT-Einheit, Integrieren (102) einer Vielzahl von HARQ-Codebüchern, die jeweils den Informationsblöcken entsprechen, zu einem integrierten HARQ-Codebuch; und
Übertragen (103, 706) des integrierten HARQ-Codebuchs an eine Basisstation;
wobei jedes HARQ-Codebuch für jeden Informationsblock einer Matrix entspricht, wobei ein gültiger Koordinatenpunkt in der Matrix einem Bit im HARQ-Codebuch entspricht, wobei für jedes HARQ-Codebuch eine maximale CBG-Nummer und eine Gesamtzahl von Downlink-Zuweisungsindizes (DAI) des jeweiligen Informationsblocks als Zeilennummer und Spaltennummer der Matrix konfiguriert sind, wobei die maximale CBG-Nummer einen Maximalwert der CBG-Nummern darstellt, die dem mindestens einen Übertragungsblock im jeweiligen Informationsblock entsprechen;
wobei das Integrieren (102) einer Vielzahl von HARQ-Codebüchern, die jeweils einer Vielzahl von Informationsblöcken entsprechen, zu einem integrierten HARQ-Codebuch für die COT-Einheit umfasst:
für die COT-Einheit, Ausrichten der Vielzahl von HARQ-Codebüchern an einem Matrixpunkt (0,0); und
Durchführen einer bitweisen AND-Operation, um das integrierte HARQ-Codebuch zu erhalten, wobei der Maximalwert der Zeilennummern und der Maximalwert der Spaltennummern der Vielzahl von HARQ-Codebüchern als Zeilennummer und Spaltennummer des integrierten HARQ-Codebuchs konfiguriert sind.

2. Verfahren nach Anspruch 1, das ferner umfasst:
Integrieren (707) einer Vielzahl von integrierten HARQ-Codebüchern, die einer Vielzahl von COT-Einheiten entsprechen, zu einem endgültigen HARQ-Codebuch;
wobei das Übertragen (103, 706) des integrierten HARQ-Codebuchs an die Basisstation das Übertragen (708) des endgültigen HARQ-Codebuchs an die Basisstation umfasst.

3. Verfahren nach einem der Ansprüche 1-2, wobei der Informationsblock einer Vielzahl von Komponententrägern entspricht.

4. Verfahren zum Empfangen eines HARQ-Codebuchs, anwendbar auf eine Basisstation, wobei das Verfahren umfasst:
Übertragen einer Vielzahl von Informationsblöcken innerhalb einer Einheit an eine Benutzervorrichtung, wobei jeder Informationsblock mindestens einen Übertragungsblock umfasst, jeder Übertragungsblock mindestens eine CBG umfasst und jeder Informationsblock eine Übertragung über einen physikalischen Downlink-Steuerkanal und eine Übertragung über einen physikalischen Downlink-Datenkanal umfasst;
Empfangen (801) eines integrierten HARQ-Codebuchs, das von der Benutzervorrichtung gesendet und nach einem Verfahren gemäß Anspruch 1 erzeugt wurde, wobei das integrierte HARQ-Codebuch der COT-Einheit entspricht;
Bestimmen (802) der Vielzahl von Informationsblöcken, die dem integrierten HARQ-Codebuch entsprechen; und
Bestimmen (803) der CBGs in der Vielzahl von Informationsblöcken, die den Bits im integrierten HARQ-Codebuch entsprechen;
wobei jedes HARQ-Codebuch für jeden Informationsblock einer Matrix entspricht, wobei ein gültiger Koordinatenpunkt in der Matrix einem Bit im HARQ-Codebuch entspricht, wobei für jedes HARQ-Codebuch eine maximale CBG-Nummer und eine Gesamtzahl von Downlink-Zuweisungsindizes (DAI) des jeweiligen Informationsblocks als Zeilennummer und Spaltennummer der Matrix konfiguriert sind, wobei die maximale CBG-Nummer einen Maximalwert der CBG-Nummern darstellt, die dem mindestens einen Übertragungsblock im jeweiligen Informationsblock entsprechen,
wobei das Verfahren weiterhin umfasst:
Bestimmen des Koordinatenpunkts, der jeder CBG in jedem Informationsblock entspricht, und Bestimmen, die CBGs, die dem Koordinatenpunkt mit dem Wert 0 entsprechen, erneut zu übertragen.

5. Verfahren nach Anspruch 4, wobei
das Empfangen (801) des integrierten HARQ-Codebuchs, das von der Benutzervorrichtung gesendet wurde, das Empfangen (901) eines endgültigen HARQ-Codebuchs umfasst, das von der Benutzervorrichtung gesendet wurde;
das Verfahren weiterhin das Bestimmen (902) einer Vielzahl von COT-Einheiten umfasst, die dem endgültigen HARQ-Codebuch entsprechen.

6. Verfahren nach Anspruch 4, wobei der Informationsblock einer Vielzahl von Komponententrägern entspricht.

7. Vorrichtung zum Übertragen eines HARQ-Codebuchs, anwendbar auf eine Benutzervorrichtung, wobei die Vorrichtung umfasst:
ein Empfangsmodul, das dazu konfiguriert ist, eine Vielzahl von Informationsblöcken innerhalb einer Kanalbelegungszeit (COT)-Einheit zu empfangen, wobei jeder Informationsblock mindestens einen Übertragungsblock umfasst, jeder Übertragungsblock mindestens eine Codeblockgruppe (CBG) umfasst und jeder Informationsblock eine Übertragung über einen physikalischen Downlink-Steuerkanal und eine Übertragung über einen physikalischen Downlink-Datenkanal umfasst;
ein Erzeugungsmodul (1101), das dazu konfiguriert ist, für jeden Informationsblock ein HARQ-Codebuch zu erzeugen, wobei ein Bit im HARQ-Codebuch angibt, ob eine Downlink-CBG, die in dem Informationsblock enthalten ist, erfolgreich empfangen wurde;
ein erstes Integrationsmodul (1102), das dazu konfiguriert ist, eine Vielzahl von HARQ-Codebüchern, die jeweils der Vielzahl von Informationsblöcken entsprechen, zu einem integrierten HARQ-Codebuch für die COT-Einheit zu integrieren; und
ein Übertragungsmodul (1103), das dazu konfiguriert ist, das integrierte HARQ-Codebuch an eine Basisstation zu übertragen;
wobei jedes HARQ-Codebuch für jeden Informationsblock einer Matrix entspricht, wobei ein gültiger Koordinatenpunkt in der Matrix einem Bit im HARQ-Codebuch entspricht, wobei für jedes HARQ-Codebuch eine maximale CBG-Nummer und eine Gesamtzahl von Downlink-Zuweisungsindizes (DAI) des jeweiligen Informationsblocks als Zeilennummer und Spaltennummer der Matrix konfiguriert sind, wobei die maximale CBG-Nummer einen Maximalwert der CBG-Nummern darstellt, die dem mindestens einen Übertragungsblock im jeweiligen Informationsblock entsprechen;
wobei das erste Integrationsmodul (1102) dazu konfiguriert ist:
für die COT-Einheit die Vielzahl von HARQ-Codebüchern an einem Matrixpunkt (0,0) auszurichten; und
eine bitweise AND-Operation durchzuführen, um das integrierte HARQ-Codebuch zu erhalten, wobei der Maximalwert der Zeilennummern und der Maximalwert der Spaltennummern der Vielzahl von HARQ-Codebüchern als Zeilennummer und Spaltennummer des integrierten HARQ-Codebuchs konfiguriert sind.

8. Vorrichtung nach Anspruch 7, die ferner umfasst:
ein zweites Integrationsmodul (1301), das dazu konfiguriert ist, eine Vielzahl von integrierten HARQ-Codebüchern, die einer Vielzahl von COT-Einheiten entsprechen, zu einem endgültigen HARQ-Codebuch zu integrieren;
wobei das Übertragungsmodul (1103) umfasst:
ein Übertragungs-Untermodul (1401), das dazu konfiguriert ist, das endgültige HARQ-Codebuch an die Basisstation zu übertragen.

9. Vorrichtung zum Empfangen eines HARQ-Codebuchs, anwendbar auf eine Basisstation, wobei die Vorrichtung umfasst:
ein Übertragungsmodul, das dazu konfiguriert ist, eine Vielzahl von Informationsblöcken innerhalb einer Einheit an eine Benutzervorrichtung zu übertragen, wobei jeder Informationsblock mindestens einen Übertragungsblock umfasst, jeder Übertragungsblock mindestens eine Codeblockgruppe (CBG) umfasst und jeder Informationsblock eine Übertragung über einen physikalischen Downlink-Steuerkanal und eine Übertragung über einen physikalischen Downlink-Datenkanal umfasst;
ein Empfangsmodul (1501), das dazu konfiguriert ist, ein integriertes HARQ-Codebuch zu empfangen, das von der Benutzervorrichtung gesendet und von einer Vorrichtung gemäß Anspruch 7 erzeugt wurde, wobei das integrierte HARQ-Codebuch der COT-Einheit entspricht, ein Informationsblock mindestens einen Übertragungsblock umfasst, ein Übertragungsblock mindestens eine CBG umfasst und ein Informationsblock eine Übertragung über einen physikalischen Downlink-Steuerkanal und eine Übertragung über einen physikalischen Downlink-Datenkanal umfasst;
ein erstes Bestimmungsmodul (1502), das dazu konfiguriert ist, die Vielzahl von Informationsblöcken zu bestimmen, die dem integrierten HARQ-Codebuch entsprechen; und
ein zweites Bestimmungsmodul (1503), das dazu konfiguriert ist, die CBGs in der Vielzahl von Informationsblöcken zu bestimmen, die den Bits im integrierten HARQ-Codebuch entsprechen;
wobei jedes HARQ-Codebuch für jeden Informationsblock einer Matrix entspricht, wobei ein gültiger Koordinatenpunkt in der Matrix einem Bit im HARQ-Codebuch entspricht, wobei für jedes HARQ-Codebuch eine maximale CBG-Nummer und eine Gesamtzahl von Downlink-Zuweisungsindizes (DAI) des jeweiligen Informationsblocks als Zeilennummer und Spaltennummer der Matrix konfiguriert sind, wobei die maximale CBG-Nummer einen Maximalwert der CBG-Nummern darstellt, die dem mindestens einen Übertragungsblock im jeweiligen Informationsblock entsprechen;
wobei die Vorrichtung ferner ein drittes Bestimmungsmodul umfasst, das dazu konfiguriert ist:
den Koordinatenpunkt zu bestimmen, der jeder CBG in jedem Informationsblock entspricht, und zu bestimmen, die CBGs, die dem Koordinatenpunkt mit dem Wert 0 entsprechen, erneut zu übertragen.

10. Vorrichtung nach Anspruch 9, wobei
das Empfangsmodul (1501) ein Empfangs-Untermodul (1601) umfasst, das dazu konfiguriert ist, ein endgültiges HARQ-Codebuch zu empfangen, das von der Benutzervorrichtung gesendet wurde;
die Vorrichtung ferner ein drittes Bestimmungsmodul (1701) umfasst, das dazu konfiguriert ist, eine Vielzahl von COT-Einheiten zu bestimmen, die dem endgültigen HARQ-Codebuch entsprechen.

11. Computerlesbares Speichermedium mit darauf gespeicherten Computeranweisungen, wobei bei Ausführung der Computeranweisungen durch einen Prozessor ein Verfahren nach einem der Ansprüche 1-3 implementiert wird.

12. Computerlesbares Speichermedium mit darauf gespeicherten Computeranweisungen, wobei bei Ausführung der Computeranweisungen durch einen Prozessor ein Verfahren nach einem der Ansprüche 4-6 implementiert wird.

## Revendications

1. Procédé de transmission d'un livre de codes de demande de répétition automatique hybride (HARQ), applicable à un équipement utilisateur, le procédé comprenant :
la réception d'une pluralité de blocs d'informations dans une unité de temps d'occupation de canal (COT), chaque bloc d'informations comprenant au moins un bloc de transmission, chaque bloc de transmission comprenant au moins un groupe de blocs de code (CBG), et chaque bloc d'informations comprenant une transmission de canal de contrôle de liaison descendante physique et une transmission de canal de données de liaison descendante physique ;
pour chaque bloc d'informations, la génération (101, 701) d'un livre de codes HARQ, un bit du livre de codes HARQ indiquant si un CBG de liaison descendante compris dans le bloc d'informations a été reçu avec succès ;
pour l'unité COT, l'intégration (102) d'une pluralité de livres de codes HARQ correspondant respectivement à la pluralité de blocs d'informations en un livre de codes HARQ intégré ; et
la transmission (103, 706) du livre de codes HARQ intégré à une station de base ;
chaque livre de codes HARQ pour chaque bloc d'informations correspondant à une matrice, un point de coordonnée valide dans la matrice correspondant à un bit dans le livre de codes HARQ, pour chaque livre de codes HARQ, un nombre maximal de CBG et un nombre total d'index d'attribution de liaison descendante (DAI) du bloc d'informations respectif étant configurés comme un nombre de lignes et un nombre de colonnes de la matrice, le nombre maximal de CBG représentant une valeur maximale des numéros de CBG correspondant aux au moins un bloc de transmission dans le bloc d'informations respectif ;
ladite intégration (102), pour une unité COT, d'une pluralité de livres de codes HARQ correspondant respectivement à une pluralité de blocs d'informations en un livre de codes HARQ intégré comprenant :
pour l'unité COT, l'alignement de la pluralité de livres de codes HARQ sur un point de matrice (0,0) ; et
la réalisation d'une opération ET par bit pour obtenir le livre de codes HARQ intégré, le nombre maximal de lignes et le nombre maximal de colonnes de la pluralité de livres de codes HARQ étant configurés comme un nombre de lignes et un nombre de colonnes du livre de codes HARQ intégré.

2. Procédé selon la revendication 1, comprenant en outre :
l'intégration (707) d'une pluralité de livres de codes HARQ intégrés correspondant à une pluralité d'unités COT en un livre de codes HARQ final ;
la transmission (103, 706) du livre de codes HARQ intégré à la station de base comprenant la transmission (708) du livre de codes HARQ final à la station de base.

3. Procédé selon l'une quelconque des revendications 1 à 2, dans lequel le bloc d'informations correspond à une pluralité de porteuses composantes.

4. Procédé de réception d'un livre de codes HARQ, applicable à une station de base, le procédé comprenant :
la transmission d'une pluralité de blocs d'informations dans une unité à un équipement utilisateur, chaque bloc d'informations comprenant au moins un bloc de transmission, chaque bloc de transmission comprenant au moins un CBG, et chaque bloc d'informations comprenant une transmission de canal de contrôle de liaison descendante physique et une transmission de canal de données de liaison descendante physique ;
la réception (801) d'un livre de codes HARQ intégré envoyé par l'équipement utilisateur et généré par un procédé selon la revendication 1, le livre de codes HARQ intégré correspondant à l'unité COT ;
la détermination (802) de la pluralité de blocs d'informations correspondant au livre de codes HARQ intégré ; et
la détermination (803) des CBG dans la pluralité de blocs d'informations qui correspondent aux bits dans le livre de codes HARQ intégré ;
chaque livre de codes HARQ pour chaque bloc d'informations correspondant à une matrice, un point de coordonnée valide dans la matrice correspondant à un bit dans le livre de codes HARQ, pour chaque livre de codes HARQ, un nombre maximal de CBG et un nombre total d'index d'attribution de liaison descendante (DAI) du bloc d'informations respectif étant configurés comme un nombre de lignes et un nombre de colonnes de la matrice, le nombre maximal de CBG représentant une valeur maximale des numéros de CBG correspondant aux au moins un bloc de transmission dans le bloc d'informations respectif,
le procédé comprenant en outre :
la détermination du point de coordonnée correspondant à chaque CBG dans chaque bloc d'informations, et la détermination de la retransmission des CBG correspondant au point de coordonnée ayant une valeur 0.

5. Procédé selon la revendication 4, dans lequel :
ladite réception (801) du livre de codes HARQ intégré envoyé par l'équipement utilisateur comprend la réception (901) d'un livre de codes HARQ final envoyé par l'équipement utilisateur ;
le procédé comprend en outre la détermination (902) d'une pluralité d'unités COT correspondant au livre de codes HARQ final.

6. Procédé selon la revendication 4, dans lequel le bloc d'informations correspond à une pluralité de porteuses composantes.

7. Appareil de transmission d'un livre de codes HARQ, applicable à un équipement utilisateur, l'appareil comprenant :
un module de réception, configuré pour recevoir une pluralité de blocs d'informations dans une unité de temps d'occupation de canal (COT), chaque bloc d'informations comprenant au moins un bloc de transmission, chaque bloc de transmission comprenant au moins un groupe de blocs de code (CBG), et chaque bloc d'informations comprenant une transmission de canal de contrôle de liaison descendante physique et une transmission de canal de données de liaison descendante physique ;
un module de génération (1101), configuré pour générer un livre de codes HARQ pour chaque bloc d'informations, un bit dans le livre de codes HARQ indiquant si un CBG de liaison descendante compris dans le bloc d'informations a été reçu avec succès ;
un premier module d'intégration (1102), configuré pour intégrer une pluralité de livres de codes HARQ correspondant respectivement à la pluralité de blocs d'informations en un livre de codes HARQ intégré pour l'unité COT ; et
un module de transmission (1103), configuré pour transmettre le livre de codes HARQ intégré à une station de base ;
chaque livre de codes HARQ pour chaque bloc d'informations correspondant à une matrice, un point de coordonnée valide dans la matrice correspondant à un bit dans le livre de codes HARQ, pour chaque livre de codes HARQ, un nombre maximal de CBG et un nombre total d'index d'attribution de liaison descendante (DAI) du bloc d'informations respectif étant configurés comme un nombre de lignes et un nombre de colonnes de la matrice, le nombre maximal de CBG représentant une valeur maximale des numéros de CBG correspondant aux au moins un bloc de transmission dans le bloc d'informations respectif ;
ledit premier module d'intégration (1102) étant configuré pour :
pour l'unité COT, aligner la pluralité de livres de codes HARQ sur un point de matrice (0,0) ; et
réaliser une opération ET par bit pour obtenir le livre de codes HARQ intégré, le nombre maximal de lignes et le nombre maximal de colonnes de la pluralité de livres de codes HARQ étant configurés comme un nombre de lignes et un nombre de colonnes du livre de codes HARQ intégré.

8. Appareil selon la revendication 7, comprenant en outre :
un deuxième module d'intégration (1301), configuré pour intégrer une pluralité de livres de codes HARQ intégrés correspondant à une pluralité d'unités COT en un livre de codes HARQ final ;
le module de transmission (1103) comprenant :
un sous-module de transmission (1401), configuré pour transmettre le livre de codes HARQ final à la station de base.

9. Appareil de réception d'un livre de codes HARQ, applicable à une station de base, l'appareil comprenant :
un module de transmission, configuré pour transmettre une pluralité de blocs d'informations dans une unité à un équipement utilisateur, chaque bloc d'informations comprenant au moins un bloc de transmission, chaque bloc de transmission comprenant au moins un groupe de blocs de code (CBG), et chaque bloc d'informations comprenant une transmission de canal de contrôle de liaison descendante physique et une transmission de canal de données de liaison descendante physique ;
un module de réception (1501), configuré pour recevoir un livre de codes HARQ intégré envoyé par l'équipement utilisateur et généré par un appareil selon la revendication 7, le livre de codes HARQ intégré correspondant à l'unité COT, un bloc d'informations comprenant au moins un bloc de transmission, un bloc de transmission comprenant au moins un CBG, et un bloc d'informations incluant une transmission de canal de contrôle de liaison descendante physique et une transmission de canal de données de liaison descendante physique ;
un premier module de détermination (1502), configuré pour déterminer la pluralité de blocs d'informations correspondant au livre de codes HARQ intégré ; et
un deuxième module de détermination (1503), configuré pour déterminer les CBG dans la pluralité de blocs d'informations qui correspondent aux bits dans le livre de codes HARQ intégré ;
chaque livre de codes HARQ pour chaque bloc d'informations correspondant à une matrice, un point de coordonnée valide dans la matrice correspondant à un bit dans le livre de codes HARQ, pour chaque livre de codes HARQ, un nombre maximal de CBG et un nombre total d'index d'attribution de liaison descendante (DAI) du bloc d'informations respectif étant configurés comme un nombre de lignes et un nombre de colonnes de la matrice, le nombre maximal de CBG représentant une valeur maximale des numéros de CBG correspondant aux au moins un bloc de transmission dans le bloc d'informations respectif ;
l'appareil comprenant en outre un troisième module de détermination configuré pour :
déterminer le point de coordonnée correspondant à chaque CBG dans chaque bloc d'informations, et déterminer de retransmettre les CBG correspondant au point de coordonnée ayant une valeur 0.

10. Appareil selon la revendication 9, dans lequel :
le module de réception (1501) comprend un sous-module de réception (1601) configuré pour recevoir un livre de codes HARQ final envoyé par l'équipement utilisateur ;
l'appareil comprend en outre un troisième module de détermination (1701) configuré pour déterminer une pluralité d'unités COT correspondant au livre de codes HARQ final.

11. Support de stockage lisible par ordinateur sur lequel sont stockées des instructions informatiques, les instructions informatiques, lorsqu'elles sont exécutées par un processeur, mettant en œuvre un procédé selon l'une quelconque des revendications 1 à 3.

12. Support de stockage lisible par ordinateur sur lequel sont stockées des instructions informatiques, les instructions informatiques, lorsqu'elles sont exécutées par un processeur, mettant en œuvre un procédé selon l'une quelconque des revendications 4 à 6.
